# EUROPEAN PATENT APPLICATION

(11) **EP 0 973 308 A1**
(43) Date of publication of application: **19.01.2000**
(21) Application number: 99202328.3
(22) Date of filing: 15.07.1999
(51) Int. Cl.: H04M 1/00, H04M 11/06

(54) **Status indication for data-communications terminal equipment**

(30) Priority: 17.07.1998 NL 1009688
(71) Applicant: Koninklijke KPN N.V., 9726 AE Groningen (NL)
(72) Inventor: Born, Hendrik Jan, 3135 AB Vlaardingen (NL); Van Hemel, Radboud Theodorus, 2593 RX Den Haag (NL)
(74) Representative: Klein, Bart

(57) **Abstract**

Apparatus for optically indicating the status of data-communications terminal equipment, such as a modem. The description is confined to a pair of two-colour LEDs (green/red), each of which may be "on", "off", or alternating between "on" and "off". One LED displays the status of the telephone connection, the other one that of the computer having the data-communications terminal equipment.

## Description

### A. BACKGROUND OF THE INVENTION

The invention relates to an apparatus provided with means for optically indicating the status of data-communications terminal equipment capable of being coupled to a computer (such as a modem), as well as equipment provided with such an apparatus.

The object of the data-communications terminal equipment referred to here is to convert a digital signal originating from a computer into a suitable digital or analogue signal to be transported by way of a telecommunication link, e.g., a telephone connection, and vice versa. Such equipment is generally provided with means for showing a user the status of the apparatus. Examples of such statuses are:
- the equipment is receiving data;
- the equipment is transmitting data;
- a telephone connection is being set up;
- the telephone line is busy.

If the telecommunication link to be used is arranged for transporting analogue signals, then the equipment at the transmitting end should convert a digital signal into an analogue signal and, at the receiving end, an analogue signal into a digital signal. In this case, it is referred to as a modem (modulator/demodulator).

The data-communications terminal equipment may be built into the housing of a computer ("internal" terminal equipment) or be located outside it and connected to it by way of a cable and connectors ("external" terminal equipment). In either case, it is desirable that the user be informed on the status of the equipment. If internal terminal equipment is concerned, then in most cases status-indicating means are present in the form of small lights simulated on the screen of the computer, although there may also be used an apparatus, having optical means, present outside the computer and coupled to it; when external terminal equipment is involved, then in most cases the equipment will dispose of an apparatus having several light-emitting diodes (LEDs).

Such an apparatus is disclosed in JP-07066896-A. The modem according to this known technique is provided with four LEDs. These indicate the following statuses:
- "modem energised" (LED 3);
- "hook status on/off" (LED 4);
- "data transmit" (LED 5);
- "data receive" (LED 6).

In the apparatus according to said known technique, four separate optical means for showing status information are applied, it being unclear to a user without knowledge of computer techniques which status information relates to the status of the telephone connection and which to that of the computer with modem. Whenever part of the envisaged modem connection does not function well, it will therefore not be understood where the error might be located.

### B. SUMMARY OF THE INVENTION

The object of an apparatus according to the invention is to eliminate the above objections, namely, to facilitate displaying status information with a minimum of optical means, while it is still made clear, even to inexperienced users, in which part of the data link a possible error might be located. For this purpose, an apparatus according to the invention is characterised in that the means for optical indication comprise two-colour light-emitting diodes (LEDs).

According to a preferred embodiment of the invention, the number of two-colour LEDs is two.

According to a further preferred embodiment of the invention, a first LED displays statuses of the telephone connection and a second LED statuses of the computer and the data-communications terminal equipment coupled thereto.

### C. REFERENCE

- JP-07066896-A Card-type modem.

### D. BRIEF DESCRIPTION OF THE DRAWING

The invention will be further explained by means of a description of an exemplary embodiment, reference being made to a drawing, wherein:
Fig. 1 shows a view from in front of an external modem provided with the apparatus according to the invention; and
Fig. 2 is a table showing statuses and associated status indications for an apparatus according to the invention.

### E. DESCRIPTION OF AN EXEMPLARY EMBODIMENT

The apparatus according to the invention may be part of, e.g., an external modem, and have the shape of a pair of LEDs which, depending on the control voltage applied, are capable of emitting red or green light. Having said this, there may also be provided an internal modem of an apparatus according to the invention, either by constructing the small lights simulated on the screen in two colours, or by coupling the modem to an indication cabinet which, as seen from the computer, is external.

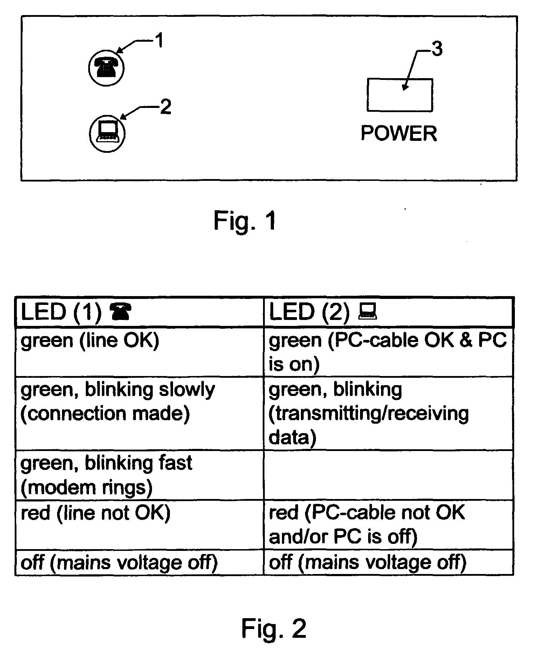

In Fig. 1, (1) is the LED showing statuses of the telephone connection and (2) the LED showing statuses of the computer cum modem. The modem is switched "on" and "off" using switch (3).

Fig. 2 shows a table having statuses and associated status indications, represented by "on" and "off" statuses and colours of LEDs (1) and (2).

Although the present specification relates to a modem, also other data-communications terminal equipment, in which no modulation or demodulation takes place (such as an ISDN terminal adapter) may be provided with an apparatus according to the invention.

## Claims

1. Apparatus provided with means for optically indicating the status of data-communications terminal equipment, capable of being coupled to a computer, such as a modem, characterised in that the means for optical indication comprise two-colour light-emitting diodes (LEDs).

2. Apparatus according to claim 1, characterised in that the number of two-colour LEDs is two.

3. Apparatus according to claim 2, characterised in that a first LED shows statuses of the telephone connection and a second LED statuses of the computer and the data-communications terminal equipment coupled thereto.

4. Data-communications terminal equipment, such as a modem, provided with an apparatus according to any of the preceding claims.
